# EUROPEAN PATENT SPECIFICATION

(11) **EP 3 758 179 B1**
(45) Date of publication and mention of the grant of the patent: **29.11.2023**
(21) Application number: 19182682.5
(22) Date of filing: 26.06.2019
(51) Int. Cl.: H02H 3/04, G08B 25/04, G08B 29/06, H02H 3/16, H02H 7/26

(54) **SEPARATING DEVICE FOR A BUS SYSTEM, CENTRAL CONTROL UNIT FOR THE BUS SYSTEM, BUS SYSTEM AND METHOD FOR OPERATING THE BUS SYSTEM**
TRENNVORRICHTUNG FÜR EIN BUSSYSTEM, ZENTRALE STEUEREINHEIT FÜR DAS BUSSYSTEM, BUSSYSTEM UND VERFAHREN ZUM BETREIBEN DES BUSSYSTEMS
DISPOSITIF DE SÉPARATION POUR UN SYSTÈME DE BUS, UNITÉ DE COMMANDE CENTRALE POUR LE SYSTÈME DE BUS, SYSTÈME DE BUS ET PROCÉDÉ DE FONCTIONNEMENT DU SYSTÈME DE BUS

(43) Date of publication of application: 30.12.2020
(73) Proprietor: Honeywell International Inc., Golden Valley, MN 55422 (US)
(72) Inventor: Menzel, Carsten, Golden Valley, MN 55422 (US); Skrodzki, Axel L., Golden Valley, MN 55422 (US); Ueding, Markus Christian, Golden Valley, MN 55422 (US); Bouras, Karim, Golden Valley, MN 55422 (US); Gasthuys, Michael, Golden Valley, MN 55422 (US); Barson, Michael, Golden Valley, MN 55422 (US); Willms, Hubert, Golden Valley, MN 55422 (US)
(74) Representative: Henkel & Partner mbB

(56) References cited:
- DE-A1-102010 044 892
- US-A1- 2014 159 740
- US-B1- 6 292 541

## Description

The present invention is directed to a separating device for a bus system, a central control unit for the bus system, a bus system comprising a plurality of separating devices and the central control unit as well as to a method for operating the bus system.

Bus systems for transmitting power and signals between a central control unit and respective sensors and actuators are widely used in today technology. Examples of these bus systems include, without being limited to it, other detecting bus systems like fire detecting and alarming systems as well as butler detecting systems.

In a bus system, to which the present invention is directed, in order to increase the reliability of the system, it is usual to provide a two wire bus arranged so as to form a loop and connecting in parallel the actuators and sensors between the two lines of the bus. Furthermore, usually the two bus lines are provided with an additional earth protection wire.

In huge building complexes, like airports, plane stations, or congress centres, a plurality of these loops are provided, which might be connected to the same or a different central control unit, which in turn, might be connected to a master control unit.

In order to increase the reliability of each loop, usually a plurality of separating devices are arranged along one wire of the loop. In case of a short circuit between the bus lines or in case of an earth fault, that is a short circuit between a bus line and the earth wire, it is possible to separate the section of the loop between two separating devices arranged at both sides of the error location, and to continue to use the system in a stub configuration.

Such a system respectively such a separating device is disclosed for example in WO2009/049949 A1, DE 10 2005 037 047 B3 or DE 10 2010 044 892 A1.

While the detection of a short circuit between the two bus lines or between one of the bus lines and the earth wire as such is relatively easy by applying a control signal to the respective bus line and monitoring the voltage or current through the bus line, it is relatively difficult localize the error position.

The above state of the art of WO2009/049949 A1 describes to implement a voltage detector and a current detector in each separating device. In case of a short circuit or earth fault, the bus line is separated in a plurality of sections and each of separating devices monitors the integrity of a respective section of the bus lines including their own current detector respectively voltage detector.

However, since the separating devices are designed so as to separate only a first bus line into respective sections, it not possible to localize an earth fault at the second bus line within the system.

It might be thought about the possibility to provide corresponding separating devices for the second bus line as well, as suggested in the above DE 10 2005 037 047 B3. However, in this case the whole arrangement will be complex and expensive, and the localizing of an earth fault will take a long time.

DE 10 2010 044 892 A1 suggests to equip one or several separating devices with a switch connecting/disconnecting the first and second bus lines through a resistor. This switch and the resistor are used to operate the separating device as an end-of-line module in case the stub configuration of the bus has to be implemented. The separating device of DE 10 2010 044 892 A1 does not include any voltage or current measurement devices.

US 2014/159740 discloses a separating device arranged between a first and a second bus line of a bus for supplying electrical power, said separating device comprises a sensing unit arranged to measure a current and comprises a controller performing fault localisation procedure.

US 6 292 541 discloses a separating device arranged between a first and a second bus line, said separating device comprises a sensing unit and a controller performing fault localisation procedure.

Accordingly, it is an objective of the present invention to provide a separating device, a central control unit, a bus system and a method for operating the bus system, which allow to localize an earth fault easier and more effectively.

This object is achieved by a Separating device configured to be arranged between a first and a second bus line of a bus for supplying electrical power and/or for performing digital communication, said separating device comprising an earth fault localization switch arranged so as to allow to connect/disconnect a first and a second bus line of the bus to/from each other, a voltage sensing unit arrange so as to measure the voltage across the earth fault localization switch, and a controller configured so as to perform an earth fault localisation procedure, wherein the second bus line is supplied with a current, connect and disconnect the first bus line from the second bus line, and measure the voltage difference on both sides of the earth fault localization switch using the voltage sensing unit while the first and second bus lines are disconnected by the earth fault localization switch.

It is further preferred that the controller of the separating device is configured to compare the voltage measurement result with a pre-stored threshold.

It is furthermore preferred that the separating device is configured to transmit at least one of a voltage measurement result and a result of a comparison of the voltage measurement result and a pre-stored threshold to the central control unit.

According to a further aspect of the invention there is provided a control unit for a bus system, said bus system comprising a first bus line, a second bus line, an earth wire, the central control unit and a plurality of separating devices as outlined above, wherein the central control unit is configured to connect the earth wire with ground or another know fixed potential, supply a current to the second bus line, instruct a first separating device to connect the first bus line and the second bus line through the earth fault localization switch, instruct a second separating device to disconnect the first and second bus line through the earth fault localization switch, so as to establish an electrical conductive path between both sides of a voltage sensing unit of said second separating device, said conductive path extending from the voltage sensing unit of said second separating device through the second bus line, the earth fault localization switch of the first separating device and the first bus line back to the voltage sensing unit of said second separating device, receive at least one of a voltage measurement result and a result of a comparison of the voltage measurement result and the threshold.

It is furthermore preferred that the central control unit is configured to receive the voltage measurement result and to compare this voltage measurement result with a respective threshold value, assigned to said second separating device transmitting the voltage measurement result, respectively to the segment or section of the monitored bus line.

According to the invention there is further provided a bus system comprising bus having a first bus line, a second bus line and an earth wire, a central control unit as described above and a plurality of separating devices as described above arranged along the first and second bus lines, wherein the central control unit is configured to control the separating devices by connecting/disconnecting at least one earth fault localisation switch.

According to the invention there is further provided a method for localizing earth faults in the above bus system comprising the steps of setting the bus system in an earth fault localisation mode, connecting the earth wire with ground Furthermore, in a preferred embodiment the method further comprises, supplying a predefined current to the second bus line, connecting the first and second bus lines through the earth fault localization switch of a first separating device, while keeping the earth fault localization switch of a second separating device disconnecting the first and second bus lines so as to establish an electrical conductive path between both sides of a voltage sensing unit of said second separating device, said conductive path extending from the voltage sensing unit of said second separating device through the second bus line, the earth fault localization switch of the first separating device and the first bus line back to the voltage sensing unit of said second separating device, measuring the voltage by the voltage sensing unit of the second separating device so as to obtain a voltage measurement result, comparing the voltage measurement result with a threshold to localize an earth fault.

Furthermore, in a preferred embodiment the method further comprises disconnecting the first and second bus lines through the earth fault localization switch of the first separating device and connecting the first and second bus lines through the earth fault localization switch of a second separating device, so as to establish a second electrical conductive path between both sides of a voltage sensing unit of said first separating device, said second conductive path extending from the voltage sensing unit of said first separating device, through the second bus line, the earth fault localization switch of the second separating device and the first bus line back to the voltage sensing unit of said first separating device, measuring the voltage by the voltage sensing unit of the first separating device so as to obtain a voltage measurement result, comparing the voltage measurement result with a threshold to localize an earth fault.

Furthermore, in a preferred embodiment the method further comprises repeating connecting and disconnecting through the earth fault localization switches of the separating devices until voltage measurement values of all separating devices along the bus had been obtained.

Furthermore, in a preferred embodiment the method further comprises detecting the presence of an earth fault by monitoring the current on the earth wire.

In the following, detailed embodiments of the invention will be described with reference to the accompanying drawing.
- Figure 1: shows a detailed view of a separating device according to the present invention;
- Figure 2: shows a bus system comprising the separating device in case of an earth fault between the second bus line and the earth wire;
- Figure 3: shows a view similar to Figure 2 for the case of an earth fault between the first bus line and the earth wire;
- Figure 4: shows a first method for carrying out the earth fault localization according to the invention; and
- Figure 5: shows a details of the central control unit.

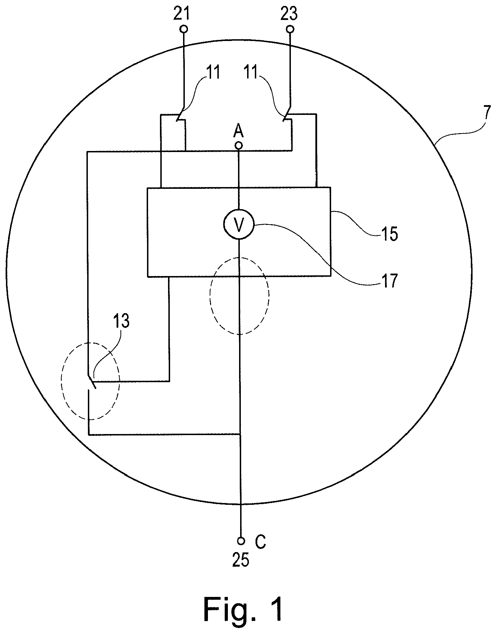

The separating device according to the present invention is shown in detail in Figure 1.

This separating device is configured to be connected with the first bus line. The separating device comprises a first switch 11 which is arranged so as to be able to interrupt the first bus line. In the embodiment shown in Figure 1, the separating device comprises a first and second terminal 21,23, to be connected with an input and an output aside of the first bus line, respectively. Between the terminal 21 and the terminal 23 one or a plurality of isolation switches 11 are provided.

Additionally, the separating device 7 of Figure 1 further comprises a third connection terminal 25 for connecting with the second bus line.

The separating device of Figure 1 includes a controller 15, which is configured to perform telecommunication through the bus lines 1, 3 with the central control unit 9, which is not shown in Figure 1.

Furthermore, the separating device 7 of Figure 1 includes a voltage sensing unit 17, which can be part of the controller 15 and which is arranged so as to measure the voltage between the two bus lines 1, 3, respectively between a point of equal potential between terminals 21 and 23 on one side and a third terminal 25 on the other side.

Additionally, the separating device 7 of Figure 1 comprises and earth fault localization switch 13, which is arranged so as to allow to establish a conductive path between the point of equal potential A and the third terminal 25, when closed, and which isolates the point of equal potential A and the third terminal 25 when in an open state.

The controller 15 is further configured to control the opening and closing operations of the isolation switch or switches 11 and the earth fault localization switch 13. Furthermore, the controller 15 can be equipped with a storage unit for storing a measurement result of the voltage sensing unit 17 and/or a threshold value, which can be used by the controller 15 to be compared with the voltage measurement result obtained from the voltage sensing unit 17.

Although not shown, the separating device 7 will usually be equipped with an energy storage unit, like a super cap or a rechargeable battery, so as to allow the operation of the separating device 7 even in case of being disconnected from the bus lines 1, 3. In this case, the separating device 7 is further equipped with corresponding switches allowing to separate this energy storage unit from the bus lines 1, 3 in case of performing an earth fault localization operation, to be described later.

In the following, the operation of the separating device 7 will be described.

In normal operation, the isolation switches 11 of the separating device 7 will be in the closed state, so as to connect the first bus line 1 of the bus 5 so as to form a closed loop. This first bus line 1 will be used to supply power and signals for the digital communication to the separating devices 7.

The bus system will additionally be equipped with other detectors and other sensors or actuators, like flashing lights, loudspeakers and so on. These detectors, sensors and actuators can either be provided as dedicated devices along the bus 5 between the first and second bus line 1, 3, or can be provided as integral part of a separating device 7.

The detectors, sensors and actuators can either be of a kind which allows that the detector, sensor or actuator is addressed by the central control unit 9, or can be a simple detector, like a smoke detector, which will only establish a conductive path between the first and second bus line 1, 3 in case of detecting smoke or fire.

In the event that during the operation of the bus system over the time, a short circuit occurs between the first bus line 1 and the second bus line 3, for example due to maintenance work or renovations of the building where the bus system is installed, the isolation switches 11 allow to disconnect a segment or section of the first bus line 1 between two separating devices 7, in which case the bus system can be operated in the form of two stub lines instead of a closed loop.

In the same manner, in case of a short circuit occurring between the first bus line 1 and the earth wire 19, the isolation switches 11 can be used to isolate the segment or section of the bus line 1, where the short circuit has occurred, and the bus system can still continue to operate. There are several techniques to determine the segment or section of the first bus line 1 where such a short circuit has occurred, and accordingly, the separating devices 7 on both sides of the damaged segment or section of the first bus line 1 can inform the central control unit 9 regarding the approximate location of the short circuit.

However, in case of an earth fault between the second bus line 3 and the earth wire 19 it will not be possible neither to determine the location of the short circuit by means of the isolation switches 11, nor will it be possible to isolate the damaged segment or section.

However, such a short circuit between the second bus line 3 and the earth wire 19 can cause serious problems especially regarding the digital communication between the separating devices 7, sensors, detectors, actuators and the central control unit 9 or between respective separating devices 7. This problem becomes even more relevant in case of a huge system comprising several central control units 9, which might be linked together by a several hierarchical bus systems and where usually all the earth wires are connected together.

In order to solve this problem, the present invention has established a procedure to localize an earth fault, that is a short circuit between the second bus line 3 and the earth wire 19, in a reliable and fast manner.

On detection of such an earth fault, for example by monitoring the voltage or current on the earth wire 19, while applying a test signal to the second bus line 3, the central bus control unit 9 will switch into an earth fault localization procedure.

In this procedure, the central control unit 9 will connect the earth wire 19 with ground or another known fixed potential relative to the second bus 3. Additionally, the first bus line 1 will be disconnected at both sides of the loop, and the second bus line 3 will be disconnected at one side of the loop. Furthermore, the central control unit 9 will apply a constant current to the connection point with the second bus line 3, so that this current flows from the central control unit 9 through the second bus line 3 and the separating devices 7 provided between the central control unit 9 and the earth fault location, and then through the short circuit forming the earth fault into the earth wire 19 and back to the central control unit 9 via the earth wire 19. Furthermore, the central control unit 9 will inform the separating devices 7 about the start of the earth fault localization procedure.

When the start of the earth fault localization procedure has been received by the separating devices 7 at least one of the separating devices 7 will close the earth fault localization switch 13 under the control of the respective controller 15 so as to establish a conductive part between the first bus line 1 and the second bus line 3 in the separating device 7.

Furthermore, at least one of the isolation switches 11 of said separation device 7 will remain in a closed state as well.

A neighbouring separating device 7 will maintain the earth fault localization switch 13 in an open state so as to disconnect the first bus line 1 and the second bus line 3, and will keep at least one isolation switch 11 closed so that an electrical conductive path is established, which extends from the voltage sensing unit 17 of the one separating device 7 through the second bus lines 3, the earth fault localization switch 13 of the neighbouring separating device 7 and the first bus line 1 with the isolation switches 11 in the closed state back to the voltage sensing unit 17 of the first mentioned separating device 7. In this manner, a four-wire sensing respectively a four-point measurement method is established for measuring the voltage drop of the segment or section of the second bus line 3 between the connection points of both separating devices 7, i.e. the terminals 25 of the two neighbouring separating devices 7.

If the two separating devices 7 performing this procedure are located between the central bus control unit 9 and the earth fault location, when viewed from the side where the second bus line 3 remains connected, there will be a detectable voltage drop due to the wire resistance and the predefined constant current flowing through the second bus line 3 and the earth wire 19.

On the other hand, if the two separating devices 7 are not located between the earth fault location and the central control unit 9, when viewed from the side where the second bus line 3 remains connected, there will be no current flowing through the respective segment or section of the second bus line 3 and accordingly, the voltage sensing unit 17 will not sense any voltage drop.

If the earth fault occurs between the two separating devices 7, the voltage drop measured by the voltage sensing unit 17 will differ from the case, that no earth fault is present.

Thus, by measuring the voltage drop of all segments of the second bus line 3 between the separating devices 7 along the bus 5, it is possible to determine the location of the earth fault.

To increase the accuracy of the measurement, it is advantageous that the central control unit 9 applies the constant current subsequently from the other side of the second bus line 3 and to repeat the localization determination.

Furthermore, the accuracy of the measurement can be improved further by measuring a segment or section of the second bus line once using the voltage sensing unit 17 of an upstream side separating device 7, that is a separating device closer to the current applying side of the central control unit 9, and subsequently by the voltage sensing unit 17 of a downstream separating device 7.

In order to accelerate the localization of the earth fault, it is advantageous to open for example the upstream side isolation switch 11 of every uneven separating device 7 and to open the downstream isolation switch 11 of every even separating device 7 while keeping the other isolation switches 11 closed. In this way, the segment or section between the first and second, the third and fourth, the fifth and sixth and so on separating device 7 can be monitored for localizing an earth fault. Subsequently the downstream side isolation switches 11 of the uneven separating devices 7 will be opened and the upstream side isolation switches of the even separating devices 7 will be opened as well. The other isolation switches 11 will be closed. Then, it is possible to monitor the segments or sections between the second and third, fourth and fifth, sixth and seventh and so on separating device 7, so that the entire second bus line 3 can be checked for an earth fault localization in a short time.

In an advantageous modification of the present invention the controller 15 of each separating device 7 will compare the result of the measurement by the voltage sensing unit 17 with a threshold value, which can either be a fixed value set in advance, or can be a value which is obtained during an initialization procedure for the fault free system and stored in a corresponding storage unit. Depending on the result of the comparison the controller 15 will transmit an information signal informing about the localization of the earth fault in a segment or section of the second bus line 3 adjacent to the respective separating device 7.

In a further advantageous modification the controller 15 will obtain the voltage measurement from the voltage sensing unit 17, will convert this value into a digital signal and will transmit the digital signal to the central control unit 9, where the value is compared with a threshold value which might be obtained in the same manner as described above, either by setting a fixed value in advance or by obtaining a threshold value for the fault free system during initialization.

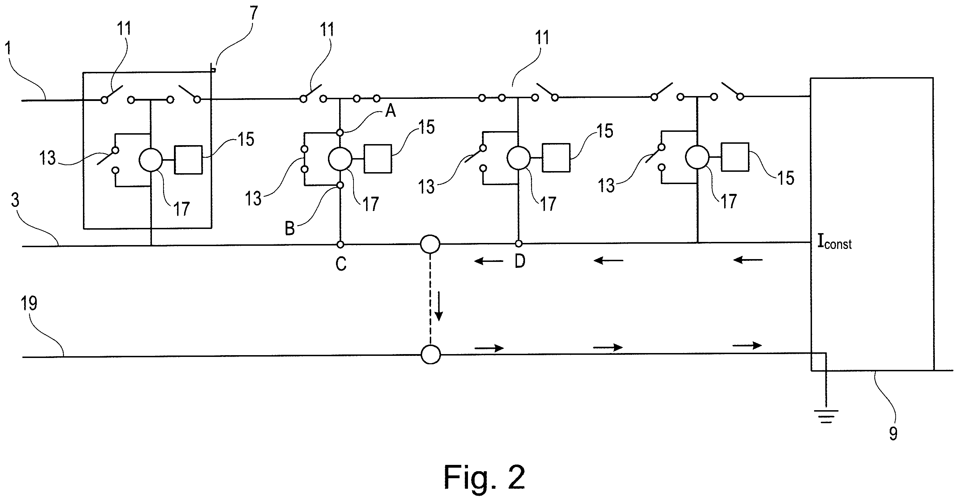

Figure 2 shows in detail the operation state of the isolation switches 11 and the earth fault localization switch 13 of several separating devices 7 arranged along the bus 5. Here, the measurement is carried out between the second and third separating device 7, while the other separating devices 7 are not involved. If the time allows, it is possible to sequentially measure the segments or sections of the second bus line 3 along the bus. This has the advantage, that the operation of the bus system is simple.

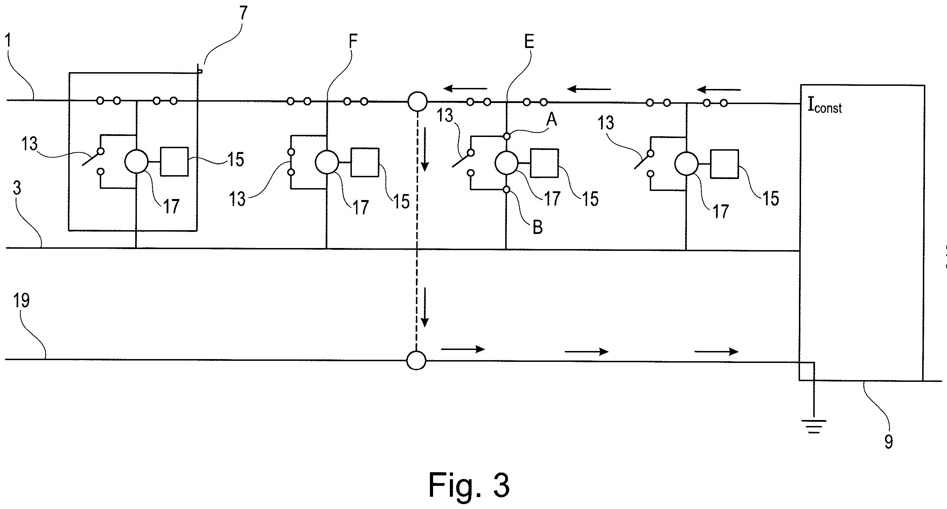

Figure 3 shows a further preferred modification of the present invention, where in addition to the described localization of an earth fault along the second bus line 3,an earth fault localization along the first bus line 1 is implemented as well. In order to detect such an earth fault along the first bus line 1, that is a short circuit between the first bus line 1 and the earth wire 19, the isolation switches 11 of all separating devices 7 are closed and a predefined constant current is applied from the central control unit 9 to one side of the first bus line 1, while the other end of the first bus line 1 is kept disconnected.

In this case the predefined constant current will flow through the first bus line 1 and the separating devices 7 to the earth fault location, and then through the short circuit of the earth fault into the earth wire and via the earth wire 19 back to the central control unit 9.

The second bus line 3 is isolated on both sides of the central control unit 9. The earth fault localization switch 13 of one of the separating devices 7 will close, so as to establish a second conductive path, which extends from the voltage sensing unit 17 of one separating device 7 through the second bus line 3, the earth fault localization switch 13 of a neighbouring separating device 7 and the first bus line 1 back to the voltage sensing unit 17 of the one separating device 7 mentioned previously. Again, the voltage drop between the connection point of the two separating devices 7 with the first bus line 1, respectively the terminals 21 and 23, can be measured using the four-wire sensing technique. Similar to the measurement of the second bus line 3, the first bus line 1 can be measured sequentially and the measured voltages can either be evaluated by the controllers 15 of the individual separating devices 7 or can be transmitted to the central control unit 9, to be evaluated there.

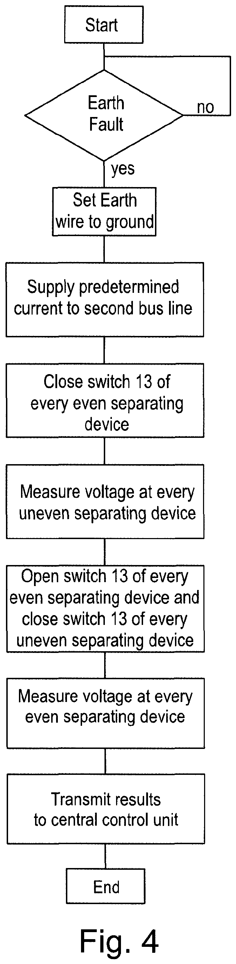

Figure 4 is a flow chart explaining in detail again one earth fault localization procedure according to the present invention.

The central control unit 9 monitors for earth faults, for example by applying a test signal to the second bus line 3 and by monitoring the earth wire 19 during the application of the test signal.

In case that an earth fault is detected, the central control unit 9 switches into an earth fault localization procedure, in which case the earth wire is set to a fixed potential or grounded second wire 19 and a predefined constant current is applied to the second bus line 3 from one side of the central control unit 9, while the other end of the second bus line 3 is disconnected from the central control unit 9. The first bus line 1 is isolated on both sides of the central control unit 9. Subsequently the earth fault localization switch 13 of one or several separating devices 7 is closed, so as to connect the first bus line 1 and the second bus line 3, while the earth fault localization switch 13 of at least one other separating device 7 is kept open, so as to disconnect the first bus line 1 and the second bus line 3.

The voltage sensing unit 17 of the separating device 7 with the earth fault localization switch 13 in the disconnecting state will measure the voltage drop, which will be representative for the voltage drop along the second bus line 3 between the connecting point or terminal 25 of this separating device 7, having the earth fault localization switch 13 disconnecting the first bus line 1 and the second bus line 3, and the connection point or terminal 25b of a neighbouring separating device 7, having the earth fault localization switch 13 in the closed state. The voltage drop will be determined by the known predefined constant current I and the wire resistance of the segment or section of the second bus line 3 between the two terminals 25, which can be either known through an initial measurement of the fault free system or can be set based on empirical calculations in view of the length of the respective section or segment and the dimensions and material constants of the wire of the second bus line 3.

For the event that an earth fault has occurred between the segment or section of the second bus line 3 presently monitored and the central control unit 9 due to the grounding of the earth wire 19 only a reduced current will flow through this segment or section of the second bus line 3, and accordingly, the voltage drop will be smaller than expected. This measurement therefore allows to localize the earth fault. Subsequently the procedure moves to monitor another segment or section of the second bus line 3 by opening the earth fault localization switch 13, which had been closed before and by closing another earth fault localization switch 13 of a separating device 7.

For those separating devices 7 located between the central control unit 9 and the earth fault localisation, when viewed from the side where the central control unit 9 is connected to the second bus line 3, the voltage drop will be as expected, since the entire predefined current will flow through the respective segments or sections of the second bus line 3. For those separating device 7 located at the other side of the earth fault location, when viewed from the side where the central control unit 9 is connected to the second bus line 3, there will be no current flowing through the respective segment or section of the second bus line 3 and therefore the measured voltage value will depart from the expected value, so that the earth fault can be localized.

Additionally, since the voltage drop of the segment or section of the second bus line 3, where the earth fault is located will be affected as well, a more precise localization will be possible. The voltage drop measured by the voltage sensing unit 17 monitoring the segment of section of the second bus line 3, where the earth fault occurs, will depend on the actual position of the earth fault in the segment or section. The value will be higher for an earth fault close to the downstream side separating device 7 and lower for an earth fault close to the upstream side separating device 7.

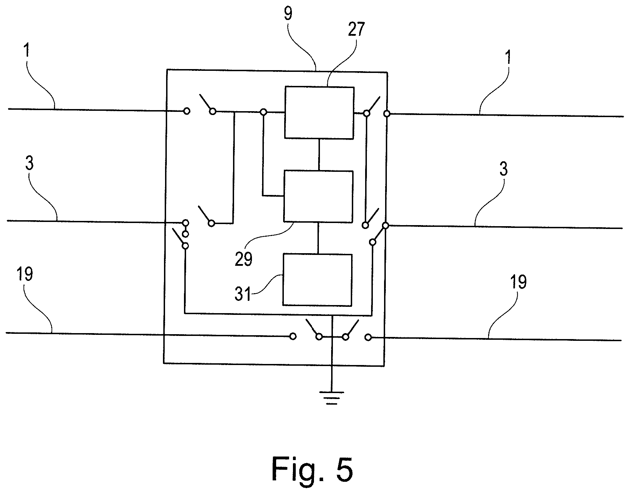

The invention furthermore concerns the central control unit 9, which is implemented to cooperate with the separating devices 7 so as to enable the earth fault localization procedure of the invention and which is shown in more detail in Figure 5. The central control unit 9 has to be configured so as to allow to connect the earth wire with ground or a fixed potential in respect to the first and second bus lines 1, 3. Additionally, the central control unit 9 has to be implemented so as to allow to apply a predefined constant current of a known value to at least one side of the second bus line and/or the first bus line. Alternatively, the constant current can be applied to the earth wire 19, in which case the earth wire 19 has to be disconnected on the other side of the central control unit 9. In this case it will be the first or second bus line 1, 3 which will be set to ground or a fixed potential.

Furthermore, the central control unit 9 has to be able to digitally communicate with the separating devices 7 so as to instruct the opening and closing of the isolation switches 11 and the earth fault localization switches 13. Furthermore, the central control unit 9 has to be configured so as to receive the measurement result either in form of the measured value of the voltage or in form of a signal indicating the deviation of the measured voltage from a threshold value for a given segment or section of the second bus line 3.

As shown in Figure 5, the central control unit 9 of this embodiment comprises a power source 27 for supplying power to either the first or the second bus line 1, 3. In normal operation of the bus system the power is supplied to the first bus line 1, whereas the second bus line 3 is grounded through respective switching means.

The central control unit 9 further comprises a controller 31 which controls the respective operation conditions of the central control unit 9 and which can be configured to perform the comparison of the voltage measurement values obtain through the voltage sensing units 17 of the individual separating devices 7 with the respective threshold values.

The central control unit 9 additionally comprises a communication means 29 for superimposing a modulated signal on the first or second bus line 1, 3 for transmitting and receiving digital coded information and commands.

As shown in Figure 5, the central control unit is further equipped with switching means for connecting the earth wire 19 with ground.

Although the present invention has been described in detail regarding a special embodiment, the present invention is not limited to this particular embodiment. For example, it will be possible to provide the bus system with additional components like actuators, sensors and/or detectors. Furthermore, in the present invention, the bus 5 has been implemented as a two wired bus transmitting both, electrical power to operate the separating devices 7, actuators, sensors, and digital communication between the respective components of the bus systems. However, the invention is not limited to this configuration. It will be possible to monitor a simple power bus without digital data communication, and to implement a wireless data communication, for example.

Furthermore, in the present embodiment, the separating devices 7 have been described so as to inform the central control unit 9 about the earth fault localization. This however is not essential for the present invention. Instead of that, it might be possible that an indication means is provided on each separating device 7, for example a LED, which will be activated if the respective separating device 7 is located on one of the both sides of the segment or section of the second bus line 3 where the earth fault has occurred. In this case, a maintenance worker has to walk along the building to inspect the separating devices 7 in order to find the earth fault localization.

Furthermore, since the voltage sensing unit 17 of the two separating devices 7 on both sides of the segment or section of the second bus line 3, where the earth fault has occurred, will have measured the voltage drop on that segment or segment, it is possible to estimate the distance between each of the respective separating devices 7 and the earth fault by taking into account the wire resistance per meter of the second bus line 3. This allows even a more precise localization of the earth fault.

In the embodiment described above, a constant current I has been supplied to the second bus line 3 for the earth port localization. However, it is possible to apply an alternating current of a known amplitude to the second wire 3 instead.

In stead of the second bus line 3, the earth fault localization can be performed for the first bus line 1, as described before, in the same manner.

In the preferred embodiments a predefined known current is applied from the central control unit 9 to one side of either the second bus line 3, the first bus line 1 or the earth wire 19. However, as an alternative the central control unit can apply a predefined voltage and measure the resulting the current. Knowing the actual current and the actual voltage drop for a segment or section of the monitored bus line 1, 3 will allow the central control unit 9, to calculate the resistance of this segment or section and thus determine, where the earth fault is localized.

In case of applying the present invention to a stub bus 5, an end of line module of the bus 5 has to be configured so as to disconnect the first and second bus lines 1, 3 for the earth fault localization procedure.

However, in case of using a resistor or a diode as end of line module, the separating device 7, located closest to the end of line module can be used to disconnect the first and second bus lines 1, 3, by opening one the isolation switches 11.

Whereas in the above description the first bus line 1 has been provided with the isolation switches 11, it is possible the have such switches arranged along the second bus line 3 as well, or to have the isolation switches arranged along the second bus line 3, only.

While in the above embodiment the bus lines 1, 3 were disconnected from the central control unit 9 during earth fault localisation procedure at one side of a respective loop, this disconnection does not necessarily be implemented in the central control unit 9, instead it can be the first and the last separating device 7, which will separate one bus line on both ends and the other bus line on one end.

## Claims

1. Separating device configured to be arranged between a first and a second bus line (1, 3) of a bus (5) for supplying electrical power and/or for performing digital communication, said separating device (7) comprising:
an earth fault localization switch (13) arranged so as to allow to connect/disconnect a first and a second bus line (1, 3) of the bus (5) to/from each other;
a voltage sensing unit (17) arrange so as to measure the voltage across the earth fault localization switch (13); and
a controller (15) configured so as to:
perform an earth fault localisation procedure, wherein the second bus line (3) is being supplied with a current;
connect and disconnect the first bus line (1) from the second bus line (3), and
measure the voltage difference on both sides of the earth fault localization switch (13) using the voltage sensing unit (17) while the first and second bus lines (1, 3) are disconnected by the earth fault localization switch (13).

2. Separating device according to claim 1, wherein the controller (15) of the separating device (7) is configured to compare the voltage measurement result with a pre-stored threshold.

3. Separating device according to claim 1 or 2, wherein
the separating device (7) is configured to transmit at least one of a voltage measurement result and a result of a comparison of the voltage measurement result and a pre-stored threshold to a central control unit (9).

4. A central control unit for a bus system, said bus system comprising a first bus line (1), a second bus line (3), an earth wire (19), the central control unit (9) and a plurality of separating devices (7) according to any of claims 1 to 3 arranged along the first and second bus lines (1, 3), wherein
the central control unit (9) is configured to
connect the earth wire (19) at least one of ground and a fixed potential; and
supply a current to the second bus line (3),
instruct a first separating device (7) to connect the first bus line (1) and the second bus line (3) through the earth fault localization switch (13);
instruct a second separating device (7) to disconnect the first and second bus line (1, 3) through the earth fault localization switch (13), so as to establish an electrical conductive path between both sides of a voltage sensing unit (17) of said second separating device (7), said conductive path extending from the voltage sensing unit (17) of said second separating device (7) through the second bus line (3), the earth fault localization switch (13) of the first separating device (7) and the first bus line (1) back to the voltage sensing unit (17) of said second separating device (7),
receive at least one of a voltage measurement result and a result of a comparison of the voltage measurement result and the threshold.

5. A central control unit according to claim 4, wherein the central control unit (9) is configured to receive the voltage measurement result and to compare this voltage measurement result with a respective threshold value, assigned to said second separating device (7) transmitting the voltage measurement result.

6. A bus system comprising bus (5) having a first bus line (1), a second bus line (3) and an earth wire (19), a central control unit (9) according to any of claims 4 and 5 and a plurality of separating devices (7) according to any of claims 1 to 3 arranged along the first and second bus lines (1, 3), wherein
the central control unit (9) is configured to control the separating devices (7) by connecting/disconnecting at least one earth fault localisation switch (13).

7. A method for localizing an earth fault in a bus system according to claim 6, the method comprising the steps of
setting the bus system in an earth fault localisation mode,
connecting the earth wire (19) with ground or a fixed potential,
supplying a current to the second bus line (3),
connecting the first and second bus lines (1, 3) through the earth fault localization switch (13) of a first separating device (7), while keeping the earth fault localization switch (13) of a second separating device (7) disconnecting the first and second bus lines (1, 3) so as to establish an electrical conductive path between both sides of a voltage sensing unit (17) of said second separating device (7), said conductive path extending from the voltage sensing unit (17) of said second separating device (7) through the second bus line (3), the earth fault localization switch (13) of the first separating device (7) and the first bus line (1) back to the voltage sensing unit (17) of said second separating device (7),
measuring the voltage by the voltage sensing unit (17) of the second separating device (7) so as to obtain a voltage measurement result,
comparing the voltage measurement result with a threshold to localize an earth fault.

8. The method of claim 7, further comprising
disconnecting the first and second bus lines (1, 3) through the earth fault localization switch (13) of the first separating device (7) and connecting the first and second bus lines (1, 3) through the earth fault localization switch (13) of a second separating device (7), so as to establish a second electrical conductive path between both sides of a voltage sensing unit (17) of said first separating device (7), said second conductive path extending from the voltage sensing unit (17) of said first separating device (7), through the second bus line (3), the earth fault localization switch (13) of the second separating device (7) and the first bus line (1) back to the voltage sensing unit (17) of said first separating device (7),
measuring the voltage by the voltage sensing unit (17) of the first separating device (7) so as to obtain a voltage measurement result,
comparing the voltage measurement result with a threshold to localize an earth fault.

9. The method of claim 7 or 8, further comprising
repeating connecting and disconnecting through the earth fault localization switches (13) of the separating devices (7) until voltage measurement values of all separating devices (7) along the bus (5) have been obtained.

10. The method of claims 7 to 9, further comprising
detecting the presence of an earth fault by monitoring the current on the earth wire (19).

## Patentansprüche

1. Trennvorrichtung zur Anordnung zwischen einer ersten und einer zweiten Busleitung (1, 3) eines Busses (5) zur Stromversorgung und/oder zur Durchführung digitaler Kommunikation, wobei die Trennvorrichtung (7) umfasst:
einen Erdschluss-Lokalisierungsschalter (13), der so angeordnet ist, dass er eine erste und eine zweite Busleitung (1, 3) des Busses (5) miteinander verbinden/trennen kann;
eine Spannungserfassungseinheit (17), die so angeordnet ist, dass sie die Spannung über dem Erdschluss-Lokalisierungsschalter (13) misst; und
eine Steuerung (15), die konfiguriert ist, zum:
Durchführen einer Erdschluss-Lokalisierung, wobei die zweite Busleitung (3) mit Strom versorgt wird;
Verbinden und Trennen der ersten Busleitung (1) von der zweiten Busleitung (3) und
Messen Sie die Spannungsdifferenz auf beiden Seiten des Erdschluss-Lokalisierungsschalters (13) mit der Spannungserfassungseinheit (17), während die erste und zweite Busleitung (1, 3) durch den Erdschluss-Lokalisierungsschalter (13) getrennt sind.

2. Trennvorrichtung nach Anspruch 1, wobei die Steuerung (15) der Trennvorrichtung (7) dazu ausgelegt ist, das Spannungsmessergebnis mit einem vorab gespeicherten Schwellenwert zu vergleichen.

3. Trennvorrichtung nach Anspruch 1 oder 2, wobei
die Trennvorrichtung (7) dazu konfiguriert ist, zumindest eines von einem Spannungsmessergebnis und einem Ergebnis eines Vergleichs des Spannungsmessergebnisses mit einem vorab gespeicherten Schwellenwert an eine zentrale Steuereinheit (9) zu übertragen.

4. Eine zentrale Steuereinheit für ein Bussystem, wobei das Bussystem eine erste Busleitung (1), eine zweite Busleitung (3), eine Erdungsleitung (19), die zentrale Steuereinheit (9) und mehrere Trennvorrichtungen (7) nach einem der Ansprüche 1 bis 3 umfasst, die entlang der ersten und zweiten Busleitungen (1, 3) angeordnet sind, wobei
die zentrale Steuereinheit (9) konfiguriert ist, zum:
Verbinden der Erdungsleitung (19) mit mindestens einem von Erde oder einem festen Potenzial, und
Versorgung der zweiten Busleitung (3) mit Strom,
Anweisen einer ersten Trennvorrichtung (7), die erste Busleitung (1) und die zweite Busleitung (3) über den Erdschluss-Lokalisierungsschalter (13) zu verbinden;
Anweisen einer zweite Trennvorrichtung (7), die erste und zweite Busleitung (1, 3) über den Erdschluss-Lokalisierungsschalter (13) zu trennen, um so einen elektrisch leitenden Pfad zwischen beiden Seiten einer Spannungserfassungseinheit (17) der zweiten Trennvorrichtung (7) herzustellen, wobei sich der leitende Pfad von der Spannungserfassungseinheit (17) der zweiten Trennvorrichtung (7) durch die zweite Busleitung (3) und den Erdschluss-Lokalisierungsschalter (13) der ersten Trennvorrichtung (7) und die erste Busleitung (1) zurück zur Spannungserfassungseinheit (17) der zweiten Trennvorrichtung (7) erstreckt,
Empfangen von mindestens einem Spannungsmessergebnis und einem Ergebnis eines Vergleichs des Spannungsmessergebnisses mit dem Schwellenwert.

5. Zentrale Steuereinheit nach Anspruch 4, wobei die zentrale Steuereinheit (9) dazu ausgebildet ist, das Spannungsmessergebnis zu empfangen und dieses Spannungsmessergebnis mit einem jeweiligen Schwellwert zu vergleichen, der der zweiten Trennvorrichtung (7) zugeordnet ist, die das Ergebnis der Spannungsmessung überträgt.

6. Bussystem umfassend einen Bus (5) mit einer ersten Busleitung (1), einer zweiten Busleitung (3) und einem Erdungskabel (19), einer zentralen Steuereinheit (9) nach einem der Ansprüche 4 und 5 und einer Mehrzahl von Trennvorrichtungen (7) nach einem der Ansprüche 1 bis 3, die entlang der ersten und zweiten Busleitungen (1, 3) angeordnet sind, wobei
dass die zentrale Steuereinheit (9) dazu eingerichtet ist, die Trennvorrichtungen (7) durch Zu-/Abschalten mindestens eines Erdschluss-Lokalisierungsschalters (13) zu steuern.

7. Verfahren zur Lokalisierung eines Erdschlusses in einem Bussystem nach Anspruch 6, wobei das Verfahren die Schritte umfasst:
Versetzen des Bussystems in einen Erdschluss-Lokalisierungsmodus,
Verbinden des Erdungsdrahtes (19) mit Erde oder einem Festpotential,
Zuführen eines Stroms zur zweiten Busleitung (3),
Verbinden der ersten und zweiten Busleitungen (1, 3) durch den Erdschluss-Lokalisierungsschalter (13) einer ersten Trennvorrichtung (7), während der Erdschluss-Lokalisierungsschalter (13) einer zweiten Trennvorrichtung (7) offen bleibt, um die erste und zweite Busleitung (1, 3) zu trennen, um einen elektrischen Leitungspfad zwischen beiden Seiten einer Spannungserfassungseinheit (17) der zweiten Trennvorrichtung (7) einzurichten, wobei sich der Leitungspfad von der Spannungserfassungseinheit (17) der zweiten Trennvorrichtung (7) über die zweite Busleitung (3), den Erdschluss-Lokalisierungsschalter (13) der ersten Trennvorrichtung (7) und die erste Busleitung (1) zurück zur Spannungserfassungseinheit (17) der zweiten Trennvorrichtung (7) erstreckt,
Messen der Spannung durch die Spannungserfassungseinheit (17) der zweiten Trennvorrichtung (7), um ein Spannungsmessergebnis zu erhalten,
Vergleich des Spannungsmessergebnisses mit einem Schwellwert zur Lokalisierung eines Erdschlusses.

8. Verfahren nach Anspruch 7, weiterhin umfassend:
Trennen der ersten und zweiten Busleitung (1, 3) durch den Erdschluss-Lokalisierungsschalter (13) der ersten Trennvorrichtung (7) und Verbinden der ersten und zweiten Busleitung (1, 3) durch den Erdschluss-Lokalisierungsschalter (13) einer zweiten Trennvorrichtung (7), um einen zweiten elektrischen Leitungspfad zwischen beiden Seiten einer Spannungserfassungseinheit (17) der ersten Trennvorrichtung (7) einzurichten, wobei sich der zweite Leitungspfad von der Spannungserfassungseinheit (17) der ersten Trennvorrichtung (7), über die zweite Busleitung (3), den Erdschluss-Lokalisierungsschalter (13) der zweiten Trennvorrichtung (7) und die erste Busleitung (1) zurück zur Spannungserfassungseinheit (17) der ersten Trennvorrichtung (7) erstreckt,
Messen der Spannung durch die Spannungserfassungseinheit (17) der ersten Trennvorrichtung (7), um ein Spannungsmessergebnis zu erhalten,
Vergleichen des Spannungsmessergebnisses mit einem Schwellenwert, um einen Erdschluss zu lokalisieren.

9. Verfahren nach Anspruch 7 oder 8, weiterhin umfassend
Wiederholtes Zu- und Abschalten der Trennvorrichtungen (7) über die Erdschluss-Lokalisierungsschalter (13) bis Spannungsmesswerte aller Trennvorrichtungen (7) entlang des Busses (5) vorliegen.

10. Verfahren nach den Ansprüchen 7 bis 9, weiterhin umfassend
Erkennen des Vorhandenseins eines Erdschlusses durch Überwachen des Stroms auf dem Erdungskabel (19).

## Revendications

1. Dispositif de séparation configuré pour être agencé entre une première et une deuxième ligne de bus (1, 3) d'un bus (5) pour fournir de l'énergie électrique et/ou pour réaliser une communication numérique, ledit dispositif de séparation (7) comprenant :
un commutateur de localisation de défaut à la terre (13) agencé de manière à permettre de connecter une première et une deuxième ligne de bus (1, 3) du bus (5) l'une à l'autre, et les déconnecter l'une de l'autre ;
une unité de détection de tension (17) agencée de manière à mesurer la tension aux bornes du commutateur de localisation de défaut à la terre (13) ; et
un dispositif de commande (15) configuré de manière à :
réaliser une procédure de localisation de défaut à la terre, dans lequel la deuxième ligne de bus (3) est alimentée en courant ;
connecter et déconnecter la première ligne de bus (1) et la deuxième ligne de bus (3), et
mesurer la différence de tension sur les deux côtés du commutateur de localisation de défaut à la terre (13) à l'aide de l'unité de détection de tension (17) tandis que les première et deuxième lignes de bus (1, 3) sont déconnectées par le commutateur de localisation de défaut à la terre (13).

2. Dispositif de séparation selon la revendication 1, dans lequel le dispositif de commande (15) du dispositif de séparation (7) est configuré pour comparer le résultat de mesure de tension à un seuil préstocké.

3. Dispositif de séparation selon la revendication 1 ou 2, dans lequel
le dispositif de séparation (7) est configuré pour transmettre au moins l'un parmi un résultat de mesure de tension et un résultat d'une comparaison du résultat de mesure de tension et d'un seuil préstocké, à une unité de commande centrale (9).

4. Unité de commande centrale pour un système de bus, ledit système de bus comprenant une première ligne de bus (1), une deuxième ligne de bus (3), un fil de terre (19), l'unité de commande centrale (9) et une pluralité de dispositifs de séparation (7) selon l'une quelconque des revendications 1 à 3 agencés le long des première et deuxième lignes de bus (1, 3), dans laquelle l'unité de commande centrale (9) est configurée pour
connecter le fil de terre (19) à au moins l'un parmi une masse et un potentiel fixe ; et
fournir un courant à la deuxième ligne de bus (3),
ordonner à un premier dispositif de séparation (7) de connecter la première ligne de bus (1) et la deuxième ligne de bus (3) à travers le commutateur de localisation de défaut à la terre (13) ;
ordonner à un deuxième dispositif de séparation (7) de déconnecter la première et la deuxième ligne de bus (1, 3) à travers le commutateur de localisation de défaut à la terre (13), de manière à établir un chemin conducteur électrique entre les deux côtés d'une unité de détection de tension (17) dudit deuxième dispositif de séparation (7), ledit chemin conducteur s'étendant depuis l'unité de détection de tension (17) dudit deuxième dispositif de séparation (7) à travers la deuxième ligne de bus (3), le commutateur de localisation de défaut à la terre (13) du premier dispositif de séparation (7) et la première ligne de bus (1) en retour vers l'unité de détection de tension (17) dudit deuxième dispositif de séparation (7),
recevoir au moins l'un parmi un résultat de mesure de tension et un résultat d'une comparaison du résultat de mesure de tension et du seuil.

5. Unité de commande centrale selon la revendication 4, dans laquelle l'unité de commande centrale (9) est configurée pour recevoir le résultat de mesure de tension et pour comparer ce résultat de mesure de tension avec une valeur seuil respective, assignée audit deuxième dispositif de séparation (7) transmettant le résultat de mesure de tension.

6. Système de bus comprenant un bus (5) ayant une première ligne de bus (1), une deuxième ligne de bus (3) et un fil de terre (19), une unité de commande centrale (9) selon l'une quelconque des revendications 4 et 5 et une pluralité de dispositifs de séparation (7) selon l'une quelconque des revendications 1 à 3 agencés le long des première et deuxième lignes de bus (1, 3), dans lequel
l'unité de commande centrale (9) est configurée pour commander les dispositifs de séparation (7) en connectant/déconnectant au moins un commutateur de localisation de défaut à la terre (13).

7. Procédé de localisation d'un défaut à la terre dans un système de bus selon la revendication 6, le procédé comprenant les étapes consistant à
établir le système de bus dans un mode de localisation de défaut à la terre,
connecter le fil de terre (19) à une masse ou à un potentiel fixe,
fournir un courant à la deuxième ligne de bus (3),
connecter les première et deuxième lignes de bus (1, 3) à travers le commutateur de localisation de défaut à la terre (13) d'un premier dispositif de séparation (7), tout en maintenant, par le commutateur de localisation de défaut à la terre (13) d'un deuxième dispositif de séparation (7), la déconnexion des première et deuxième lignes de bus (1, 3) de manière à établir un chemin conducteur électrique entre les deux côtés d'une unité de détection de tension (17) dudit deuxième dispositif de séparation (7), ledit chemin conducteur s'étendant depuis l'unité de détection de tension (17) dudit deuxième dispositif de séparation (7) à travers la deuxième ligne de bus (3), le commutateur de localisation de défaut à la terre (13) du premier dispositif de séparation (7) et la première ligne de bus (1) en retour vers l'unité de détection de tension (17) dudit deuxième dispositif de séparation (7),
mesurer la tension par l'unité de détection de tension (17) du deuxième dispositif de séparation (7) de manière à obtenir un résultat de mesure de tension,
comparer le résultat de mesure de tension à un seuil pour localiser un défaut à la terre.

8. Procédé selon la revendication 7, comprenant en outre
la déconnexion des première et deuxième lignes de bus (1, 3) à travers le commutateur de localisation de défaut à la terre (13) du premier dispositif de séparation (7) et la connexion des première et deuxième lignes de bus (1, 3) à travers le commutateur de localisation de défaut à la terre (13) d'un deuxième dispositif de séparation (7), de manière à établir un deuxième chemin conducteur électrique entre les deux côtés d'une unité de détection de tension (17) dudit premier dispositif de séparation (7), ledit deuxième chemin conducteur s'étendant depuis l'unité de détection de tension (17) dudit premier dispositif de séparation (7), à travers la deuxième ligne de bus (3), le commutateur de localisation de défaut à la terre (13) du deuxième dispositif de séparation (7) et la première ligne de bus (1) en retour vers l'unité de détection de tension (17) dudit premier dispositif de séparation (7),
la mesure de la tension par l'unité de détection de tension (17) du premier dispositif de séparation (7) de manière à obtenir un résultat de mesure de tension,
la comparaison du résultat de mesure de tension à un seuil pour localiser un défaut à la terre.

9. Procédé selon la revendication 7 ou 8, comprenant en outre
la répétition de la connexion et de la déconnexion à travers les commutateurs de localisation de défaut à la terre (13) des dispositifs de séparation (7) jusqu'à ce que des valeurs de mesure de tension de tous les dispositifs de séparation (7) le long du bus (5) aient été obtenues.

10. Procédé selon les revendications 7 à 9, comprenant en outre
la détection de la présence d'un défaut à la terre en surveillant le courant sur le fil de terre (19).
